# EUROPÄISCHE PATENTSCHRIFT

(11) **EP 3 716 816 B1**
(45) Veröffentlichungstag und Bekanntmachung des Hinweises auf die Patenterteilung: **06.09.2023**
(21) Anmeldenummer: 18804025.7
(22) Anmeldetag: 23.11.2018
(51) Int. Cl.: A47C 27/06, F16F 3/02

(54) **DEFORMIERBARER KÖRPER UND VERFAHREN ZU DESSEN HERSTELLUNG**
DEFORMABLE BODY AND METHOD FOR MANUFACTURING THE SAME
CORPS POUVANT ÊTRE DÉFORMÉ ET SON PROCÉDÉ DE FABRICATION

(30) Priorität: 27.11.2017 EP 17203794
(43) Veröffentlichungstag der Anmeldung: 07.10.2020
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); DEGIORGIO, Nicolas, 47807 Krefeld (DE); KÜNZEL, Jonas, 51381 Leverkusen (DE); LIU, Ting, 50668 Köln (DE); WOLF, Maximilian, 50823 Köln (DE)
(74) Vertreter: Davepon, Björn
(86) Internationale Anmeldenummer: PCT/EP2018/082428
(87) Internationale Veröffentlichungsnummer: WO 2019/101955

(56) Entgegenhaltungen:
- US-A1- 2013 096 887
- US-A1- 2015 308 533

## Beschreibung

Die vorliegende Erfindung betrifft einen deformierbaren Körper, wobei der Körper aus einer Mehrzahl von Schichten eines polymeren Aufbaumaterials aufgebaut ist und in welchem eine Aufbaurichtung senkrecht zu den Schichten definiert ist. Der Körper umfasst Schichten mit einer Mehrzahl von durch das Aufbaumaterial gebildeten, sich periodisch berührend verlaufenden Kurvenpaaren. Die Erfindung betrifft weiterhin ein Verfahren zu dessen Herstellung und eine Vorrichtung zum Stützen und/oder Lagern einer Person mit dem erfindungsgemäßen Körper. Der Körper kann unter anderem als Matratze oder als Fahrzeugsitz eingesetzt werden.

Stützende Elemente oder Lagerungselemente können beispielsweise in Form von Matratzen ausgebildet sein. Derartige Matratzen bestehen typischerweise aus Schaumstoffmaterialien, wobei insbesondere die Matratzen aus mehreren übereinanderliegenden Schaumstoffschichten bestehen können. Um den Liegekomfort derartiger Matratzen zu erhöhen, ist es üblich, sogenannte Zonierungen in Matratzen vorzunehmen. Bei einer derartigen Zonierung werden über die Fläche der Matratze verteilt Zonen mit unterschiedlichen elastischen Eigenschaften, das heißt unterschiedlicher Nachgiebigkeit gebildet. Hierbei wird dem Umstand Rechnung getragen, dass eine Matratze beispielsweise im Beinbereich eine andere Nachgiebigkeit aufweisen soll als im Rückenbereich. Zur Ausbildung derartiger Zonierungen in mehrschichtigen Matratzen werden typischerweise in eine mittlere Matratzen-Schicht mit oszillierenden Messern lokal Hohlräume eingearbeitet. Auf die Ober- und Unterseite dieser mittleren Matratzen-Schicht wird dann eine jeweils vollständig geschlossene obere und untere Matratzen-Schicht aufgebracht.

DE 10 2015 100 816 B3 offenbart ein Verfahren zur Herstellung eines körperstützenden Elements, welches von einer Matratze, einem Kissen, einem Sitz oder einem Teil eines Sitzes gebildet ist, umfassend die Verfahrensschritte der Vorgabe von Druckdaten, welche eine personenspezifische dreidimensionale Stützstruktur bilden und der Herstellung des körperstützenden Elements anhand der Druckdaten mittels eines 3D-Druckers. Anhand der Druckdaten können Bereiche unterschiedlicher Elastizität durch die Bildung von Hohlräumen unterschiedlicher Größen und/oder unterschiedlicher Anzahl durch den 3D-Drucker erzeugt werden.

DE 10 2011 010 047 A1 betrifft ein Kunststoffformteil, das materialeinheitlich und einstückig ausgebildet ist, wobei das Kunststoffformteil eine Vielzahl elastisch deformierbarer und miteinander gekoppelter Federelemente aufweist, die definiert geformt sind, wobei die elastische Deformierbarkeit des Kunststoffformteils durch die Gestaltung der Federelemente bestimmbar ist.

US 2015/308533 A1 offenbart, dass Polsterartikel wie Matratzen einen dreidimensionalen Wellenfederkern enthalten können. Die Wellfeder umfasst eine polymere Gitterfederstruktur, die mehrere abwechselnde Schichten enthält, die gestapelt angeordnet sind, um eine Höhe der Wellfeder zu definieren, wobei jede der abwechselnden Schichten durch einen einzelnen Strang mit einer oder mehreren nach oben und unten gerichteten Wellen definiert ist, wobei die abwechselnde Schichten so angeordnet sind, dass eine nach oben gerichtete Wellung einer Schicht mit einer nach unten gerichteten Wellung der anderen Schicht verbunden ist, um eine Zelle zu definieren, die dazu konfiguriert ist, eine Druckkraft aufzunehmen, wobei die Gitterstruktur bei Betrachtung von oben nach unten eine sinusförmige Form aufweist und eingerichtet ist, dreidimensionale Struktur aufzuweisen.

Ein wichtiges Kriterium für das Komfortempfinden eines körperstützenden Elements wie beispielsweise einer Matratze oder eines Kissens ist, inwieweit das Material des Elements einen Luftaustausch durch das Element hindurch mit der sie umgebenden Luft zulässt. Ohne diesen Luftaustausch könnte weder Wärme vom menschlichen Körper abgeführt werden, was zu vermehrtem Schwitzen führt, noch feuchte Luft vom Schweiß des menschlichen Körpers oder von einem Waschprozess abtransportiert werden.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, einen für transpirierende Körper zur Lagerung geeigneten deformierbaren Körper bereitzustellen, welcher einen Luftaustauch zulässt (um ein möglichst hohes Komfortgefühl für den transpirierenden Körper bereitzustellen). Eine weitere Aufgabe der Erfindung war es einen deformierbaren Körper bereitzustellen, der ein unterschiedliches Deformationsverhalten in Abhängigkeit der Deformationsrichtung aufweist. Desweiteren war eine Aufgabe der Erfindung, einen solchen Körper möglichst effizient und/oder individualisiert und/oder ressourcenschonend herstellen zu können.

Erfindungsgemäß gelöst wird die Aufgabe durch einen Körper gemäß Anspruch 1, ein Verfahren gemäß Anspruch 6 und eine Vorrichtung gemäß Anspruch 10. Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß vorgeschlagen wird somit ein deformierbarer Körper, wobei der Körper aus einer Mehrzahl von Schichten eines polymeren Aufbaumaterials aufgebaut ist und in welchem eine Aufbaurichtung senkrecht zu den Schichten definiert ist. Der Körper umfasst Schichten mit einer Mehrzahl von durch das Aufbaumaterial gebildeten, sich periodisch berührend verlaufenden Kurvenpaaren.

Der erfindungsgemäße deformierbare Körper kann, bedingt durch den Aufbau aus Kurvenpaaren, in Ausbreitungsrichtung der Kurvenpaare eine andere Stauchhärte aufweisen als senkrecht zu dieser Ausbreitungsrichtung. Die Kompressionsdynamik lässt sich weiterhin durch die individuelle Gestaltung der Kurven einstellen. Das Gleiche gilt für das Lenken der Richtung der Kompression in eine vorbestimmte Richtung.

Der Begriff "deformierbar" bedeutet insbesondere, dass in mindestens einer Raumrichtung der Körper eine Stauchhärte (40% Stauchung, DIN EN ISO 3386-1:2010-09) von ≥ 10 bis ≤ 1000 kPa, bevorzugt ≥ 20 bis ≤ 700 kPa und mehr bevorzugt ≥ 30 bis ≤ 500 kPa aufweist.

Im erfindungsgemäßen Körper lassen sich Kanäle definieren, durch die belüftet werden kann. Die Form des Körpers führt auch dazu, dass der Körper gut auswaschbar ist, im Gegensatz zu porösen Materialien wie Schaumstoffen. Eine Integration von elektronischen Elementen wie Sensoren oder Aktoren ist ebenfalls einfach möglich.

In einer Schicht des Körpers kann die Anzahl der Kurvenpaare beispielsweise ≥ 10 bis ≤ 100 Kurvenpaare pro Meter (senkrecht zur Ausbreitungsrichtung der Kurvenpaare) betragen. Die maximale Entfernung der korrespondierenden Abschnitte der Kurven im Kurvenpaar kann zum Beispiel ≥ 5 mm bis ≤ 100 mm, bevorzugt ≥ 10 mm bis ≤ 50 mm und mehr bevorzugt ≥ 15 mm bis ≤ 30 mm betragen.

Im erfindungsgemäßen Körper ist die Berührung von Kurvenpaaren als eine stoffschlüssige Verbindung zu betrachten.

Im erfindungsgemäßen Körper können ein Teil seiner Schichten oder auch alle Schichten die sich periodisch berührend verlaufenden Kurvenpaare enthalten.

Der erfindungsgemäße Körper kann, seinem Einsatzzweck als stützendes Element und/oder Lagerungselement entsprechend, komprimiert werden. In mindestens einer Raumrichtung weist der Körper eine Stauchhärte (40% Stauchung, DIN EN ISO 3386-1:2010-09) von ≥ 10 bis ≤ 1000 kPa, bevorzugt ≥ 20 bis ≤ 700 kPa und mehr bevorzugt ≥ 30 bis ≤ 500 kPa auf.

Der erfindungsgemäße Körper kann, seinem Einsatzzweck als stützendes und/oder Lagerungselement entsprechend dein Raumdichte von 30-800 g/l, bevorzugt 50-500 g/l und besonders bevorzugt 80-400 g/l aufweisen.

Es ist möglich, dass die Stauchhärte (40% Stauchung, DIN EN ISO 3386-1:2010-09) des Körpers in einer ausgewählten Raumrichtung um ≥ 10%, bevorzugt ≥ 15% bis ≤ 400%, mehr bevorzugt ≥ 20% bis ≤ 200%, von der Stauchhärte (40% Stauchung, DIN EN ISO 3386-1:2010-09) des Körpers in einer Raumrichtung senkrecht zu der ausgewählten Raumrichtung abweicht.

Vorzugsweise ist der Körper zumindest teilweise aus einem Material gebildet, welches eine oder mehrere der nachfolgenden Eigenschaften aufweist:
- ein tan δ-Wert (20 °C, DMA, DIN EN ISO 6721) von ≥ 0,01 bis ≤ 1 , bevorzugt ≥ 0,05 bis ≤ 0,8, mehr bevorzugt ≥ 0,1 bis ≤ 0,5
- ein Maximum des tan δ-Werts (DMA, DIN EN ISO 6721) bei ≥ -40 °C bis ≤ 150 °C, bevorzugt ≥
- 20 °C bis ≤ 80 °C, mehr bevorzugt ≥-10 °C bis ≤ 60 °C
- einen Elastizitäts-Modul (DIN EN ISO 604:2003-12) von ≥ 10 MPa bis ≤ 2000 MPa, bevorzugt ≥ 20 MPa bis ≤ 1000 MPa, mehr bevorzugt ≥ 30 MPa bis ≤ 800 MPa, ganz besonders bevorzugt ≥ 40 MPa bis ≤ 400 MPA.
- eine Shore-Härte (DIN ISO 7619-1:2012-02) von ≥ 40A bis ≤ 85D, bevorzugt ≥ 70 Shore A bis ≤ 65 Shore D, mehr bevorzugt ≥ 80 Shore A bis ≤ 98 Shore A
- ein Schmelzpunkt (DIN EN ISO 11357-3:2013-04) von ≤ 280 °C, bevorzugt ≥ 30 °C bis ≤ 250 °C, mehr bevorzugt ≥ 40 °C bis ≤ 200 °C
- eine Glasübergangstemperatur T_{g} (DMA, DIN EN ISO 6721) von ≤ 200 °C, bevorzugt ≥ -50 °C bis ≤ 160 °C, mehr bevorzugt ≥ -20 °C bis ≤ 80 °C.

Weiterhin umfasst der Körper Schichten mit einer Mehrzahl von durch das Aufbaumaterial gebildeten, gleichläufig zueinander verlaufenden Kurvenpaaren,
die Kurvenpaare umfassen jeweils zwei gegenläufig zueinander verlaufende periodische Kurven,
die Kurvenpaare umfassen Abschnitte maximaler Entfernung zueinander und Abschnitte minimaler Entfernung zueinander,
in einem Teil der Schichten in benachbarten Kurvenpaaren ist wenigstens ein Abschnitt maximaler Entfernung einer Kurve mit einem Abschnitt maximaler Entfernung einer benachbarten Kurve verbunden,
in einem weiteren Teil der Schichten in benachbarten Kurvenpaaren ist wenigstens ein Abschnitt maximaler Entfernung einer Kurve mit einem Abschnitt maximaler Entfernung einer benachbarten Kurve nicht verbunden,
in einem weiteren Teil der Schichten sind in benachbarten Kurvenpaaren wenigstens ein Teil der Abschnitte minimaler Entfernung miteinander verbunden und
in einem weiteren Teil der Schichten sind in benachbarten Kurvenpaaren wenigstens ein Teil der Abschnitte minimaler Entfernung) nicht miteinander verbunden.

Gleichläufige Kurvenpaare haben eine gemeinsame Ausbreitungsrichtung in einer Ebene. Vorzugsweise sind die Ausbreitungsrichtungen vollkommen gleich, aber die Ausbreitungsvektoren der Kurvenpaare können auch einen Winkel von < 10° zueinander bilden.

Gegenläufige Kurven im Sinne der vorliegenden Erfindung sind Kurven, welche in einer gemeinsamen Ebene verlaufen und welche in dieser Ebene sich entweder gleichzeitig aufeinander zu oder voneinander weg bewegen. Die Kurvenpaare können perfekt gegenläufig verlaufen, das heißt nicht gegeneinander verschoben, oder die beiden Kurven, welche das Kurvenpaar ausmachen, können in Ausbreitungsrichtung gegeneinander verschoben sein. Diese Phasenverschiebung kann beispielsweise > 0 bis < π/2, vorzugsweise ≥ π/32 bis ≤ π/4 betragen.

Weiterhin wiederholt in Aufbaurichtung gesehen sich die folgende miteinander in Aufbaurichtung wenigstens teilweise verbundener Schichtengruppe wenigstens einmal:
eine oder mehrere Schichten, in denen in Kurvenpaaren wenigstens ein Teil der Abschnitte minimaler Entfernung der Kurven miteinander verbunden sind;
eine oder mehrere Schichten, in denen in Kurvenpaaren die Kurven nicht miteinander verbunden sind und nicht mit Kurven benachbarter Kurvenpaare verbunden sind; und
eine oder mehrere Schichten, in denen in benachbarten Kurvenpaaren wenigstens ein Abschnitt maximaler Entfernung einer Kurve mit einem Abschnitt maximaler Entfernung einer benachbarten Kurve verbunden ist.

In einer weiteren bevorzugten Ausfuhrungsform ist in Aufbaurichtung gesehen in den einzelnen Schichten der Abstand der Kurven zueinander in einem Kurvenpaar wenigstens teilweise periodisch veränderlich. Vorzugsweise ist der Anteil der Kurvenpaare, deren Abstand zueinander periodisch veränderlich ist, ≥ 50%, mehr bevorzugt ≥ 75% und besonders bevorzugt ≥ 95% der Gesamtanzahl der Kurvenpaare.

In einer weiteren bevorzugten Ausfuhrungsform liegen wenigstens in einem Teil der Kurvenpaare Kurven vor, welche den gleichen Betrag ihrer maximalen Amplitude aufweisen. Vorzugsweise ist der Anteil der Kurvenpaare, die den gleichen Betrag der maximalen Amplitude aufweisen, ≥ 50%, mehr bevorzugt ≥ 75% und besonders bevorzugt ≥ 95% der Gesamtanzahl der Kurvenpaare.

In einer weiteren bevorzugten Ausfuhrungsform liegen wenigstens in einem Teil der Kurvenpaare Kurven vor, welche nicht den gleichen Betrag ihrer maximalen Amplitude aufweisen. Dann ist es bevorzugt, dass der Anteil der Kurvenpaare, die nicht den gleichen Betrag der maximalen Amplitude aufweisen, ≥ 50%, mehr bevorzugt ≥ 75% und besonders bevorzugt ≥ 95% der Gesamtanzahl der Kurvenpaare.

In einer weiteren bevorzugten Ausführungsfonn bilden in wenigstens einer Schicht Verbindungspunkte der Kurven untereinander und/oder miteinander ein periodisch wiederkehrendes Muster. Wenn die Verbindungspunkte in einem Volumen periodisch wiederkehrend verteilt sind, lässt sich dieser Umstand mit den Mitteln der Kristallographie beschreiben. Die Verbindungspunkte können entsprechend den 14 Bravais-Gittern angeordnet sein: kubisch-primitiv (sc, simple cubic), kubisch-raumzentriert (bcc, body centered cubic), kubisch-flächenzentriert (fcc, face centered cubic), tetragonal-primitiv, tetragonal-raumzentriert, orthorhombisch-primitiv, orthorhombischbasiszentriert, orthorhombisch-raumzentriert, orthorhombisch-flächenzentriert, hexagonal-primitiv, rhomboedrisch, monoklin-primitiv, monoklin-basiszentriert und triklin. Bevorzugt sind die kubischen Gitter sc, fcc und bcc.

In einer weiteren bevorzugten Ausfuhrungsform werden in wenigstens einer Schicht in wenigstens einem Kurvenpaar die Kurven durch eine Sinusfunktion beschrieben. Mit eingeschlossen sind Funktionen gemäß f(x) = a sin (ωx + ϕ) mit dem Skalierungsfaktor a, der Frequenz ω und der Phasenverschiebung ϕ.

In einer weiteren bevorzugten Ausfuhrungsform umfasst das polymere Aufbaumaterial einen Thermoplasten, vorzugsweise ein thermoplastisches Elastomer, mehr bevorzugt ausgewählt aus der Gruppe: thermoplastische Copolyamide (TPA), thermoplastische Copolyester (TPC), thermoplastische Elastomere auf Olefinbasis (TPO), Styrol-Blockcopolymere (TPS), thermoplastische Elastomere auf Urethanbasis (TPU), vernetzte thermoplastische Elastomere auf Olefinbasis (TPV), thermoplastische Elastomere auf Polyvinylchlorid-Basis (PVC), thermoplastische Elastomere auf Silikon-Basis und einer Kombination aus mindestens zwei dieser Elastomere. Möglich sind auch Kombinationen aus ≥ 3, ≥ 4 oder ≥ 5 dieser thermoplastischen Elastomere, in noch einer weiteren bevorzugten Ausfuhrungsform umfasst das polymere Aufbaumaterial ein thermoplastisches Vulkanisat und in noch einer weiteren bevorzugten Ausfuhrungsform umfasst das polymere Aufbaumaterial einen vulkanisierbaren Gummi.

Im Sinne der vorliegenden Erfindung ist ein Polymer elastisch, wenn es eine Bruchdehnung im Zugversuchstest nach DIN 53504 von ≥ 50% zeigt. Dann kann der herzustellende Körper beispielsweise einen Druckverformungsrest nach 40% Kompression (DIN ISO 815-1) von ≤ 50% , bevorzugt < 30% und besonders bevorzugt < 10% aufweisen.

Das elastische Polymer kann noch weitere Additive wie Füllstoffe, Stabilisatoren und dergleichen, aber auch weitere Polymere, enthalten. Der Gesamtgehalt an Additiven im elastischen Polymer kann beispielsweise ≥ 0,1 Gewichts-% bis ≤ 70 Gewichts-%, bevorzugt ≥ 1 Gewichts-% bis ≤ 40 Gewichts-%, betragen.

In einer weiteren bevorzugten Ausfuhrungsform ist der mindestens eine Thermoplast ein thermoplastisches Elastomer und weist eine Shore A Härte gemäß DIN ISO 7619-1 von ≥ 40 bis ≤ 98 (bevorzugt ≥ 50 bis ≤ 95, mehr bevorzugt ≥ 60 bis ≤ 92) auf. Weiterhin kann das Elastomer einen Schmelzbereich (DSC, Differential Scanning Calorimetry; zweite Aufheizung mit Aufheizrate 5 K/min) von ≥ 20 °C bis ≤ 250 °C (bevorzugt ≥ 40 °C bis ≤ 200 °C, mehr bevorzugt ≥ 50 °C bis ≤ 180 °C) aufweisen und/oder eine Schmelzvolumenrate (melt volume rate, MVR) gemäß ISO 1133 (190 °C, 10 kg) von ≥ 25 bis ≤ 90 (bevorzugt ≥ 30 bis ≤ 80, mehr bevorzugt ≥ 35 bis ≤ 65) cm³/10 min aufweisen.

Bei dieser DSC-Messung wird das Material folgendem Temperaturzyklus unterworfen: 1 Minute bei minus 60 °C, danach Aufheizen auf 250 °C mit 5 Kelvin/Minute, dann Abkühlen auf minus 60 °C mit 5 Kelvin/Minute, dann 1 Minute bei minus 60 °C, dann Aufheizen auf 250 °C mit 5 Kelvin/Minute.

In einer weiteren bevorzugten Ausfuhrungsform ist das Elastomer ein thermoplastisches Elastomer und weist einen Schmelzbereich (DSC, Differential Scanning Calorimetry; zweite Aufheizung mit Aufheizrate 5 K/min) von ≥ 20 °C bis ≤ 200 °C (bevorzugt ≥ 40 °C bis ≤ 190 °C, mehr bevorzugt ≥ 70 °C bis ≤ 180 °C) auf, eine Shore A Härte gemäß DIN ISO 7619-1 von ≥ 40 bis ≤ 98 (bevorzugt ≥ 50 bis ≤ 95, mehr bevorzugt ≥ 60 bis ≤ 90) auf, bei einer Temperatur Teine Schmelzvolumenrate (melt volume rate, MVR) gemäß ISO 1133 (10 kg) von 5 bis 15 (bevorzugt ≥ 6 bis ≤ 12, mehr bevorzugt ≥ 7 bis ≤ 10) cm³/10 min auf und eine Änderung der Schmelzvolumenrate (10 kg) bei einer Erhöhung dieser Temperatur T um 20 °C von ≤ 90 (bevorzugt ≤ 70, mehr bevorzugt ≤ 50) cm³/10 min auf.

Auch bei dieser DSC-Messung wird das Material folgendem Temperaturzyklus unterworfen: 1 Minute bei minus 60 °C, danach Aufheizen auf 200 °C mit 5 Kelvin/Minute, dann Abkühlen auf minus 60 °C mit 5 Kelvin/Minute, dann 1 Minute bei minus 60 °C, dann Aufheizen auf 200 °C mit 5 Kelvin/Minute.

Dieses thermoplastische Elastomer, bevorzugt ein thermoplastisches Polyurethanelastomer, weist ein flaches Aufschmelzverhalten auf. Das Aufschmelzverhalten wird über die Änderung des MVR (melt volume rate) gemäß ISO 1133 bei 5 Minuten Vorheizzeit und 10 kg in Abhängigkeit von der Temperatur bestimmt. Als "flach" gilt ein Aufschmelzverhalten dann, wenn der MVR bei einer Ausgangstemperatur Tₓ einen Ausgangswert von 5 bis 15 cm³/10 min aufweist und durch Temperaturerhöhung um 20 °C auf Tₓ₊₂₀ um nicht mehr als 90 cm³/10 min steigt.

In einer weiteren bevorzugten Ausführungsform ist das Elastomer ein thermoplastisches Polyurethanelastomer, das erhältlich ist aus der Reaktion der Komponenten:
a) mindestens ein organisches Diisocyanat
b) mindestens eine mit gegenüber Isocyanatgruppen reaktiven Gruppen aufweisenden Verbindung mit einem zahlenmittleren Molekulargewicht (Mₙ) von ≥ 500 g/mol bis ≤ 6000 g/mol und einer zahlenmittleren Funktionalität der Gesamtheit der Komponenten unter b) von ≥ 1,8 bis ≤ 2,5
c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

Zur Synthese dieses thermoplastischen Polyurethanelastomers (TPU) seien im Einzelnen beispielhaft als Isocyanatkomponente unter a) genannt: aliphatische Diisocyanate wie Ethylendiisocyanat, 1,4-Tetramethylendiisocyant, 1,6-Hexamethylendiisocyanat, 1,12-Dodecandiisocyanat, cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat. 4.4'-Diphenylmethandiisocyanat, 2,4'-Diphenylmethandiisocyanat und 2,2'- Diphenylmethandiisocyanat. Gemische aus 2,4'-Diphenylmethandiisocyanat und 4,4'-Diphenylmethandiisocyanat, urethanmodifizierte flüssige 4,4'- Diphenylmethandiisocyanate oder 2,4'- Diphenylmethandiisocyanate, 4,4'-Diisocyanatodiphenylethan-(1 ,2) und 1,5-Naphthylendiisocyanat. Vorzugsweise verwendet werden 1 ,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens so viel Polyisocyanat zugesetzt werden, dass ein noch thermoplastisch verarbeitbares Produkt entsteht. Beispiele für Polyisocyanate sind Triphenylmethan-4,4',4"- triisocyanat und Polyphenylpolymethylen-polyisocyanate.

Als längerkettige Isocyanat-reaktive Verbindungen unter b) seien beispielhaft solche mit im Mittel mindestens 1,8 bis 3,0 Zerewitinoff-aktiven Wasserstoffatomen und einem zahlenmittleren Molekulargewicht von 500 bis 10000 g/mol genannt. Eingeschlossen sind neben Aminogruppen Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten Mn von 500 bis 6000 g/mol, besonders bevorzugt solche mit einem zahlenmittleren Molekulargewicht Mn von 600 bis 4000 g/mol, z.B. Hydroxylgruppen aufweisende Polyesterpolyole, Polyetherpolyole, Polycarbonatpolyole und Polyesterpolyamide. Geeignete Polyesterdiolen können dadurch hergestellt werden, dass man ein oder mehrere Alkylen Oxide mit 2 bis 4 Kohlenstoffatomen im Alkylen Rest mit einem Startermolekül, das zwei aktive Wasserstoffatome gebunden enthält, umsetzt. Als Alkylen Oxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht Wasser, Aminoalkohole, wie N-Alkyl- diethanolamine, beispielsweise N-Methyl-diethanolamin und Diole wie Ethylenglykol, 1,3- Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyetherdiole eingesetzt werden, jedoch höchstens in solcher Menge, dass ein noch thermoplastisch verarbeitbares Produkt entsteht. Die im Wesentlichen linearen Polyetherdiole besitzen vorzugsweise zahlenmittlere Molekulargewichte n von 500 bis 6000 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1 ,4-Butandiol, 1,5-Pentandiol, 1 ,6- Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1 ,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolacton. Als Polyesterdiole vorzugsweise verwendet werden Ethandiolpolyadipate, 1,4-Butandiolpolyadipate, Ethandiol- 1 ,4-Butandiolpolyadipate, 1,6-Hexandiol-neopentylglykolpolyadipate, 1,6-Hexandiol-1,4-butandiolpolyadipate und Polycaprolactone. Die Polyesterdiole besitzen bevorzugt zahlenmittlere Molekulargewichte Mn von 450 bis 6000 g/mol und können einzeln oder in Form von Mischungen untereinander zur Anwendung kommen.

Die Kettenverlängerungsmittel unter c) besitzen im Mittel 1,8 bis 3,0 Zerewitinoff-aktive Wasserstoffatome und haben ein Molekulargewicht von 60 bis 450 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1 ,2-Propandiol, 1,3-Propandiol, 1 ,4-Butandiol, 2,3- Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-l,4-butandiol, Hydroxyalkylenether des Hydrochinons, z.B. 1 ,4-Di(b-hydroxyethyl)-hydrochinon, ethoxylierte Bisphenole, z.B. 1,4-Di(b-hydroxyethyl)- bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1 ,4-Butandiol, 1,6-Hexandiol, 1,4-Di(ß-hydroxyethyl)-hydrochinon oder 1,4-Di(ß-hydroxyethyl)-bisphenol A verwendet. Es können auch Gemische der oben genannten Kettenverlängerer eingesetzt werden.

Daneben können auch kleinere Mengen an Triolen zugesetzt werden.

Gegenüber Isocyanaten monofunktionelle Verbindungen können in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die gegenüber Isocyanat reaktiven Substanzen sollten bevorzugt so gewählt werden, dass ihre zahlenmittlere Funktionalität zwei nicht wesentlich überschreitet, wenn thermoplastisch verarbeitbare Polyurethanelastomere hergestellt werden sollen. Falls höherfunktionelle Verbindungen eingesetzt werden, sollte durch Verbindungen mit einer Funktionalität < 2 die Gesamtfunktionalität entsprechend herabgesetzt werden.

Die relativen Mengen der Isocyanatgruppen und Isocyanat reaktiven Gruppen werden bevorzugt so gewählt, dass das Verhältnis 0,9: 1 bis 1,2:1 beträgt, bevorzugt 0,95:1 bis 1,1:1.

Die erfindungsgemäß verwendbaren thermoplastischen Poyurethanelastomere können als Hilfs- und/oder Zusatzstoffe bis zu maximal 20 Gew.-%, bezogen auf die Gesamtmenge an TPU, der üblichen Hilfs- und Zusatzstoffe enthalten. Typische Hilfs- und Zusatzstoffe sind Katalysatoren, Antiblockmittel, Inhibitoren, Pigmente, Farbstoffe, Flammschutzmittel, Stabilisatoren gegen Alterungs- und Witterungseinflüsse, gegen Hydrolyse, Licht, Hitze und Verfärbung, Weichmacher, Gleit- und Entformungsmittel, fungistatisch und bakteriostatisch wirkende Substanzen, Verstärkungsmittel sowie anorganische und/oder organische Füllstoffe und deren Mischungen.

Beispiele für die Zusatzstoffe sind Gleitmittel, wie Fettsäureester, deren Metallseifen, Fettsäureamide, Fettsäureesteramide und Siliconverbindungen, und Verstärkungsmittel, wie z.B. faserartige Verstärkungsstoffe, wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff- Additive von R. Gächter u. H. Müller (Hanser Verlag München 1990) oder der DE-A 29 01 774 zu entnehmen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den eingesetzten TPU beträgt in der Regel etwa 0 bis 5 Gew.-%, bevorzugt 0 bis 2 Gew.-%, bezogen auf die Gesamtmenge an TPU.

Gemäß einer weiteren bevorzugten Ausfuhrungsform enthält der Körper wenigstens zwei verschiedene Aufbaumaterialien und/oder dass die Kurven weisen verschiedene Radien auf.

In einer weiteren bevorzugten Ausfuhrungsform des Bauteils korreliert der Kurvenradius der periodischen Kurvenelemente nicht mit der Kurvenschichtdicke oder der Kurvenlinienbreite. In einer bevorzugten Ausfuhrungsform sind Kurvenschichtdicke und Kurvenlinienbreite bei unterschiedlichen Kurvenradien gleich und die Eigenschaften des erfindungsgemäß deformierbaren Körpers werden durch den Kurvenradius der periodischen Kurven und / oder durch den Modul des verwendeten Materials bestimmt. In einer bevorzugten Ausfuhrungsform werden bei Kurvenradien > 1,5 cm Materialien mit einem Modul > 300 MPa, bevorzugt > 500 MPa besonders bevorzugt > 700 MPa und bei Kurvenradien < 1 cm Materialien mit einem Modul < 800 MPa, bevorzugt < 600 MPa, besonders bevorzugt < 500 MPa verwendet jeweils bei 23°C als E Modul nach Zugversuchstest nach DIN 53504 ermittelt.

In einer weiteren bevorzugten Ausfuhrungsform werden mindestens zwei verschiedene erfindungsgemäße Geometrien und/oder zwei verschiedene Kurvenradien in einem Bauteil verwendet.

In einer weiteren bevorzugten Ausfuhrungsform ist der Körper wenigstens teilweise von einer Hülle umschlossen.

Gegenstand der Erfindung ist weiterhin ein Verfahren zur Herstellung eines erfindungsgemäßen deformierbaren Körpers, wobei der Körper in einem additiven Fertigungsverfahren aus einem polymeren Aufbaumaterial hergestellt wird.

Insbesondere kann in dem Verfahren der Körper in einem Schmelzschichtungsverfahren aus einem polymeren Aufbaumaterial hergestellt werden und das Aufbaumaterial zu mindestens einem Zeitpunkt aus einer Mehrzahl von Druckköpfen gleichzeitig ausgetragen werden.

Im erfindungsgemäßen Verfahren wird in einer Aufbaurichtung gesehen die folgende miteinander wenigstens teilweise verbundener Schichtengruppe in wenigsten einer Wiederholung erzeugt:
eine oder mehrere Schichten, in denen in Kurvenpaaren wenigstens ein Teil der Abschnitte minimaler Entfernung der Kurven miteinander verbunden sind;
eine oder mehrere Schichten, in denen in Kurvenpaaren die Kurven nicht miteinander verbunden sind und nicht mit Kurven benachbarter Kurvenpaare verbunden sind; und
eine oder mehrere Schichten, in denen in benachbarten Kurvenpaaren wenigstens ein Abschnitt maximaler Entfernung einer Kurve mit einem Abschnitt maximaler Entfernung einer benachbarten Kurve verbunden ist.

Das Erzeugen der Kurven im erfindungsgemäßen Verfahren eröffnet die Möglichkeit, den erfindungsgemäßen Körper mit hoher Druckgeschwindigkeit im additiven Fertigungsverfahren herzustellen. Insbesondere im FDM-Verfahren kann der Druckkopf über weite Strecken produktiv eingesetzt werden, anstelle repositioniert zu werden oder aufgrund von Bewegungen mit kleinen Kurvenradien abgebremst werden zu müssen.

In einer weiteren bevorzugten Ausführungsform des Verfahrens umfasst das polymere Aufbaumaterial ein thermoplastisches Elastomer wie zuvor beschrieben. Zur Vermeidung unnötiger Wiederholungen werden die Details zum thermoplastischen Elastomer an dieser Stelle nicht erneut aufgeführt.

Mittels eines additiven Fertigungsverfahrens ist eine individualisierte Anpassung beispielsweise der Dämpfungseigenschaften eines als Matratze oder Sitzpolster vorgesehenen Körpers möglich. Individualisiert bedeutet hierbei, dass nicht nur Einzelstücke erzeugt werden können, sondern dass auch die Dämpfungseigenschaften eines Stütz- oder Lagerungselements an unterschiedlichen Punkten wunschgemäß und mit eingestellt werden können. Damit kann beispielsweise eine Matratze auf einen Kunden nach den anatomischen Erfordernissen beziehungsweise Bedürfnissen individuell erstellt werden. Um beispielsweise eine optimale Druckverteilung beim Liegen auf der Matratze zu erreichen, kann zunächst ein Druckprofil des Körpers auf einer Sensorfläche aufgenommen und die so gewonnenen Daten für die Individualisierung der Matratze verwendet werden. Die Daten werden dann dem additiven Fertigungsverfahren in an sich bekannter Weise zugeführt.

Das Verfahren kann beispielsweise ausgewählt sein aus Schmelzschichtung (Fused Filament Fabrication, FFF oder Fused Deposition Modeling, FDM), Ink-Jet-Printing, Photopolymer-Jetting, Stereo Lithography, Selective Laser Sintering, Digital Light Processing based additive manufacturing system, Continuous Liquid Interface Production, Selective Laser Melting, Binder Jetting based additive manufacturing, Multijet Fusion based additive manufacturing, High Speed Sintering Process und Laminated Object Modelling. Vorzugsweise ist das additive Fertigungsverfahren ein Sinterverfahren oder ein Schmelzschichtungs-Verfahren.

Sinterverfahren sind im Kontext der vorliegenden Erfindung Verfahren, welche insbesondere thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie.

Komplexe Geometrien sind dadurch wirtschaftlicher zu fertigen als beim FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen. Bevorzugt sind selektive Lasersinterverfahren (SLS).

Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Fasern eingesetzt werden. Maschinen für das FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 200 mm/s. Die Schichtdicke liegt je nach Anwendungsfall in einem Bereich von 0,025 und 3 mm, der Austrittsdurchmesser des Materialstrahls (Düsenauslassdurchmesser) von der Düse beträgt typischerweise mindestens bei 0,05 mm, bevorzugt > 0,1 mm und < 2 mm, bevorzugt > 0,4 mm und < 1,5mm, bevorzugt >0,6 mm und < 1,2 mm.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80 °C bis 420 °C betragen. Es ist zudem möglich, den Substrattisch zu beheizen, beispielsweise auf 20 °C bis 250 °C und in einer besonderen Ausfiihrungsform zu kühlen auf < 20°C. Hierdurch kann ein zu schnelles Abkühlen der aufgetragenen Schicht verhindert werden, sodass eine weitere, hierauf aufgetragene Schicht sich ausreichend mit der ersten Schicht verbindet bzw. ein zu langsames Kristallisieren der aufgetragenen Schicht verhindert werden, so dass die nächste Schicht einen ausreichend festen Untergrund beim Aufbau filigraner Strukturen erhält

In einer weiteren bevorzugten Ausfuhrungsform ist die Aufbaugeschwindigkeit der erfindungsmäßen Geometrien in einer solchen Form gestaltet, dass zwischen den Lagenschichten an einem beliebigen Teil des Bauteils eine Zeit von < 20 Sekunden oder >30 Sekunden, bevorzugt <15 Sekunden und >50 Sekunden und ganz besonders bevorzugt <10 Sekunden oder >80 Sekunden besteht. In einer weiteren besonderen Ausfuhrungsform ist die mittlere Lagengeschwindigkeit des Aufbauprozesses der erfindungsgemäßen Geometrien in einer solchen Form gestaltet, dass eine Lagenschicht des Bauteils eine mittlere Zeit von >30 Sekunden, bevorzugt > 50 Sekunden, besonders bevorzugt >80 Sekunden, besonders bevorzugt > 120 Sekunden und ganz besonders bevorzugt > 300 Sekunden bedarf.

In einer weiteren bevorzugten Ausfuhrungsform ist die Aufbaugeschwindigkeit der Geometrien in einer solchen Form gestaltet, dass die mittlere Ablagegeschwindigkeit des Baumaterials >10 mm/s und < 500 mm/s, bevorzugt > 30 mm/s und < 400 mm/s, bevorzugt > 50 mm/s, bevorzugt > 60 mm/s und < 300 mm/s, bevorzugt > 70 mm/s und < 150 mm/s beträgt.

In einer weiteren bevorzugten Ausfuhrungsform wird ein im Verfahren benutzter Bauraum nicht gesondert temperiert, sondern der Bauprozess findet bei Raumtemperatur statt. Als typische Raumtemperatur wird dabei eine Temperatur von 15-30°C verstanden.

In einer weiteren bevorzugten Ausfuhrungsform findet der 3D-Druck der erfindungsgemäßen Geometrien auf einer beweglichen "unendlichen" Druckplattform, zum Beispiel in Form eines Förderbandes, statt, so dass ein kontinuierlicher Druck möglich ist.

In einer weiteren bevorzugten Ausfuhrungsform ist das additive Fertigungsverfahren ein Schmelzschichtungsverfahren.

In einer weiteren bevorzugten Ausfuhrungsform wird in dem Schmelzschichtungsverfahren das Aufbaumaterial aus einer Mehrzahl von Druckköpfen ausgetragen. Vorzugsweise handelt es sich hierbei um 5 oder mehr Druckköpfe, besonders bevorzugt 10 oder mehr Druckköpfe. Der Aufbau des erfindungsgemäßen Körpers aus Kurvenpaaren ist einer Parallelisierung seiner Herstellung besonders zuträglich. In einer weiteren bevorzugten Ausführungsform arbeiten mindestens 50% der Druckköpfe für mindestens 50% der Zeit gleichzeitig an einem Bauteil. Das gleichzeitige Arbeiten der Druckköpfe an einem Bauteil ist bei dem erfindungsgemäßen Verfahren aufgrund der bevorzugt wiederholenden Geometrien durch eine zumindest Linienüberlappung der Bauräume der einzelnen Druckköpfe leicht zu steuern.

In einer weiteren bevorzugten Ausfuhrungsform wird das Aufbaumaterial zu mindestens einem Zeitpunkt aus einer Mehrzahl von Druckköpfen gleichzeitig ausgetragen. Bevorzugt sind die Druckköpfe auf einer Positionierstange für Druckköpfe vorgesehen. Bevorzugt sind mindestens 3 oder mindestens 5 Druckköpfe an einer beweglichen Stange versetzt und unabhängig voneinander beweglich montiert, wobei die Beweglichkeit über einen Mindestabstand so gestaltet ist, dass eine Berührung der Druckköpfe über Software oder Hardware bevorzugt vermieden wird.

In einer weiteren bevorzugten Ausfuhrungsform sind mehr als 1 Druckkopf, bevorzugt mehr als 3 und besonders bevorzugt mehr als 5 Druckköpfe an einer beweglichen Stange versetzt und fix montiert.

In einer weiteren bevorzugten Ausführungsform werden in mindestens einer Raumrichtung mehr als eine Stange parallel mit mehr als einem Druckkopf betrieben.

In einer weiteren bevorzugten Ausführungsform beträgt die mittlere Druckzeit ohne Absatz (darunter wird ein mindestens 0,05 Sekunden langer Materialtransportstopp in einem FFF Verfahren verstanden) der erfindungsgemäßen Geometrien > 3 Sekunden, bevorzugt > 5 Sekunden und ganz bevorzugt > 10 Sekunden bzw. die mittlere Drucklänge ohne Absatz > 5cm, bevorzugt > 10cm, ganz besonders bevorzugt > 15cm.

Die vorliegende Erfindung betrifft weiterhin eine Vorrichtung zum Stützen und/oder Lagern einer Person, umfassend einen erfindungsgemäßen deformierbaren Körper. Die erfindungsgemäße Vorrichtung kann zum Beispiel ein Bett, ein Polstermöbel oder ein Fahrzeugsitz sein. Neben dem erfindungsgemäßen deformierbaren Körper, welcher als Matratze oder Polsterfläche fungiert, kann die Vorrichtung aktive und passive Elemente enthalten. Passive Elemente sind Bauteile wie Rahmen, Gelenke, Rollen und dergleichen. Aktive Elemente können Stellmotoren wie zum Beispiel Motoren zum Verstellen einer Sitzgeometrie, Sensoren oder andere Elemente sein, welche eine gewünschte Funktionalität bereitstellen.

Vorzugsweise ist die erfindungsgemäße Vorrichtung ein Bett für Krankenhäuser und Pflegeeinrichtungen. Ein weiteres bevorzugtes Anwendungsgebiet sind Sitze in Fahrzeugen, insbesondere in Fahrzeugen für lange Strecken. In solchen Anwendungen kommen die Vorteile des erfindungsgemäßen deformierbaren Körpers bei in herkömmlichen Schaumstoffen nicht realisierbaren Belüftbarkeit, besonders gut zur Geltung.

In einer bevorzugten Ausführungsform sind im erfindungsgemäßen Körper Aussparungen für Lüfter und/oder Sensoren vorgesehen. Dann können Lüfter und/oder Sensoren in den dafür vorgesehenen Aussparungen montiert werden.

In einer weiteren bevorzugten Ausfuhrungsform umfasst die erfindungsgemäße Vorrichtung weiterhin einen Belüfter zum Durchleiten von Luft durch zumindest einen Teil des deformierbaren Körpers. Im einfachsten Fall wird Luft aus der Umgebung der Vorrichtung durch zumindest einen Teil des deformierbaren Körpers geleitet, so dass die von einer die Vorrichtung nutzenden und auf dem porösen Körper sitzenden oder liegenden Person abgegebene durch Schwitzen abgegebene Feuchtigkeit leicht abtransportiert werden kann. Schon dadurch wird der Sitz- oder Liegekomfort erhöht.

Wenn die Luft gegenüber der Raumtemperatur durch ein oder mehrere Heizelemente erwärmt wird (Temperatur > 20 °C) oder durch ein oder mehrere Kühlelemente gekühlt wird (Temperatur ≤ 25 °C), kann das Komfortempfinden weiter erhöht werden.

Die Erfindung wird anhand der nachfolgenden Figuren näher erläutert, ohne jedoch darauf beschränkt zu sein. Es zeigen:
FIG. 1 eine Querschnittsansicht eines ersten erfindungsgemäßen Körpers
FIG. 2 eine weitere Querschnittsansicht des ersten erfindungsgemäßen Körpers
FIG. 3 eine weitere Querschnittsansicht des ersten erfindungsgemäßen Körpers
FIG. 4 eine Querschnittsansicht eines zweiten erfindungsgemäßen Körpers
FIG. 5 eine weitere Querschnittsansicht des zweiten erfindungsgemäßen Körpers
FIG. 6 eine weitere Querschnittsansicht des zweiten erfindungsgemäßen Körpers
FIG. 7 eine Ansicht eines dritten erfindungsgemäßen Körpers
FIG. 8 den dritten erfindungsgemäßen Körper in Draufsicht und zwei Seitenansichten
FIG. 9 eine Querschnittsansicht eines vierten erfindungsgemäßen Körpers
FIG. 10 eine Querschnittsansicht eines fünften erfindungsgemäßen Körpers
FIG. 11 eine Querschnittsansicht eines sechsten erfindungsgemäßen Körpers
FIG. 12 eine Querschnittsansicht des von einer Hülle umschlossenen sechsten erfindungsgemäßen Körpers

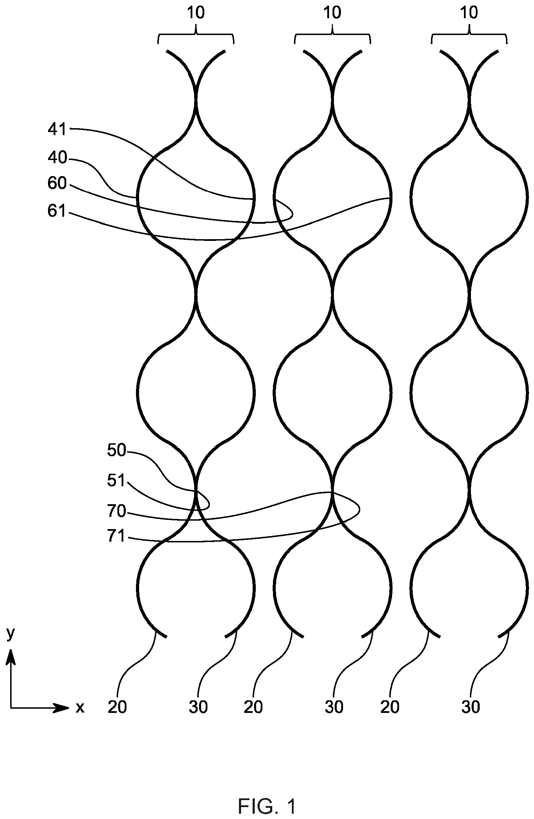

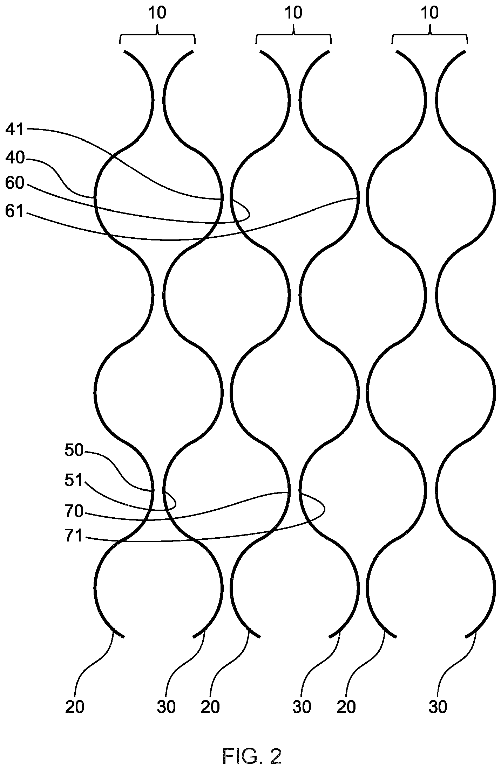

FIG. 1 zeigt schematisch eine Querschnittsansicht eines ersten erfindungsgemäßen deformierbaren Körpers. Die in FIG. 1 abgebildeten Orientierungen der x- und y-Achse werden auch für die FIG. 2 bis 6 beibehalten. Dargestellt ist eine Schicht senkrecht zur Aufbaurichtung (z-Achse im kartesischen Koordinatensystem). In dieser Schicht liegen Kurvenpaare 10 vor, welche im vorliegenden Fall parallel zueinander verlaufen. Jedes Kurvenpaar enthält eine Kurve 20 und eine Kurve 30, welche durch das Aufbaumaterial wie beispielsweise ein thermoplastisches Polyurethan gebildet werden.

Die Kurven 20 und 30 erstrecken sich in y-Richtung und verlaufen gegenläufig zueinander: dort, wo die Kurve 20 eine Auslenkung in -x-Richtung hat, hat Kurve 30 eine Auslenkung in +x-Richtung und umgekehrt.

Dadurch, dass die Kurven 20 und 30 gegenläufig zueinander verlaufen, ergeben sich Abschnitte, in denen die Kurven 20 und 30 ihren maximalen Abstand voneinander aufweisen. Diese sind mit den Bezugszeichen 40 und 41 sowie 60 und 61 gekennzeichnet. Ebenso ergeben sich Abschnitte, in denen die Kurven 20 und 30 ihren minimalen Abstand zueinander aufweisen. Diese sind entsprechend mit den Bezugszeichen 50 und 51 sowie 70 und 71 gekennzeichnet.

In der in FIG. 1 abgebildeten Schicht sind die Abschnitte maximaler Entfernung 41 einer Kurve 30 nicht mit Abschnitten maximaler Entfernung 60 einer Kurve 20 des benachbarten Kurvenpaares 10 verbunden. Dafür sind in den Kurvenpaaren 10 die Abschnitte der Kurven 20, 30 mit minimaler Entfernung zueinander 50, 51 und 70, 71 jeweils miteinander verbunden.

FIG. 2 zeigt eine weitere Querschnittsansicht des ersten erfindungsgemäßen deformierbaren Körpers. Gegenüber der in FIG. 1 gezeigten Ansicht unterscheidet sich der Querschnitt gemäß FIG. 2 durch eine andere Position in der Aufbaurichtung (z-Achse). Es sind sowohl die Abschnitte maximaler Entfernung 41 einer Kurve 30 nicht mit Abschnitten maximaler Entfernung 60 einer Kurve 20 des benachbarten Kurvenpaares 10 verbunden als auch in den Kurvenpaaren 10 die Abschnitte der Kurven 20, 30 mit minimaler Entfernung zueinander 50, 51 und 70, 71 nicht miteinander verbunden. Die in FIG. 2 gezeigte Querschnittsansicht kann von der Ansicht aus FIG. 1 dahingehend abgeleitet werden, dass innerhalb eines Kurvenpaares 10 der x-Abstand der das Kurvenpaar bildenden Kurven 20 und 30 vergrößert hat, ohne dass es zu einer Kontaktierung mit einer Kurve des benachbarten Kurvenpaares kommt.

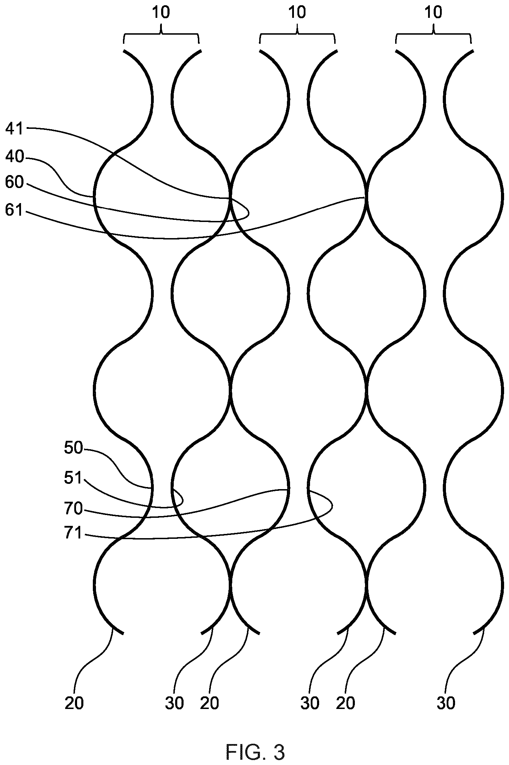

FIG. 3 zeigt eine weitere Querschnittsansicht des ersten erfindungsgemäßen deformierbaren Körpers. Gegenüber den in FIG. 1 und 2 gezeigten Ansichten unterscheidet sich der Querschnitt gemäß FIG. 3 durch eine andere Position in der Aufbaurichtung (z-Achse). Hier sind die Abschnitte maximaler Entfernung 41 einer Kurve 30 mit Abschnitten maximaler Entfernung 60 einer Kurve 20 des benachbarten Kurvenpaares 10 verbunden, dafür sind in den Kurvenpaaren 10 die Abschnitte der Kurven 20, 30 mit minimaler Entfernung zueinander 50, 51 und 70, 71 nicht miteinander verbunden. Die in FIG. 3 gezeigte Querschnittsansicht kann von der Ansicht aus FIG. 1 dahingehend abgeleitet werden, dass innerhalb eines Kurvenpaares 10 der x-Abstand der das Kurvenpaar bildenden Kurven 20 und 30 sich soweit vergrößert hat, dass es zu einer Kontaktierung mit einer Kurve des benachbarten Kurvenpaares kommt.

Ein erfindungsgemäßer deformierbarer Körper kann somit durch ein Verfahren schematisch aufgebaut werden, in dem zunächst eine Schicht mit einer Anordnung des Aufbaumterials in Kurven gemäß FIG. 1 generiert wird. In der in Aufbaurichtung nächsten Schicht haben sich die Kurven 20, 30 der jeweiligen Kurvenpaare 10 um eine vorbestimmte Strecke voneinander wegbewegt, in der in Aufbaurichtung darauffolgenden Schicht erneut um eine vorbestimmte Strecke, etc. Dieses wird solange wiederholt, bis sich eine Kontaktierung gemäß FIG. 3 ergibt. Anschließend läuft dieser Vorgang in Aufbaurichtung, aber mit umgekehrter Richtung der Bewegung der Kurven 20, 30 zueinander ab, bis wieder eine Kontaktierung gemäß FIG. 1 erhalten wird. Dieses wird so lange wiederholt, bis der gewünschte Gegenstand gebildet ist.

In dem durch die Querschnittsansichten der FIG. 1 bis 3 veranschaulichten erfindungsgemäßen deformierbaren Körper verlaufen die Kurvenpaare 10 so, dass die Stellen, an denen Kurven sich kontaktieren, die Kreuzungspunkte eines Gitters bilden, welches im vorliegenden Fall rechtwinklig ist. Es ist ebenfalls möglich, dass das Gitter ein schiefwinkliges Gitter ist, so dass vier Kreuzungspunkte ein Parallelogramm bilden. Weiterhin ist es möglich, dass die Abstände der Kreuzungspunkte des Gitters innerhalb einer Querschnittsebene gleich sind oder unterschiedliche Werte aufweisen.

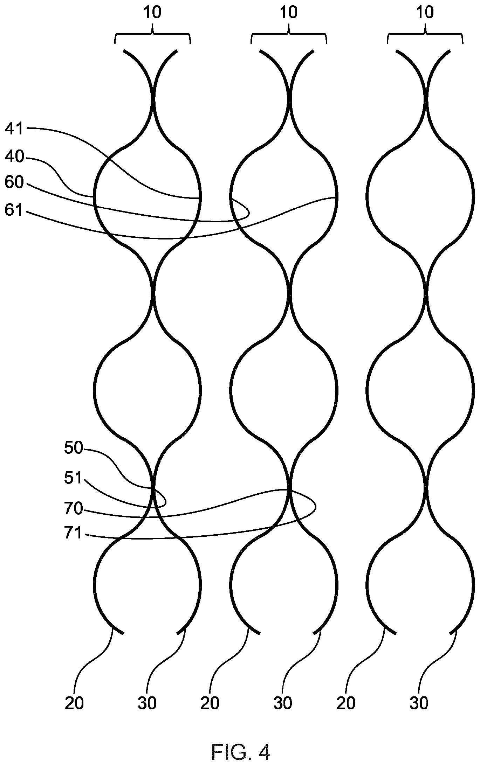

In dem durch die Querschnittsansichten der FIG. 1 bis 3 veranschaulichten ersten erfindungsgemäßen deformierbaren Körper enthalten die Kurvenpaare 10 Kurven mit gleicher absoluter Amplitude in x-Richtung. Es ist jedoch auch möglich, dass die Kurven, welche die Kurvenpaare 10 bilden, unterschiedliche Amplituden in x-Richtung aufweisen. Dieses ist in den FIG. 4 bis 6 dargestellt, welche einen zweiten erfindungsgemäßen deformierbaren Körper betreffen.

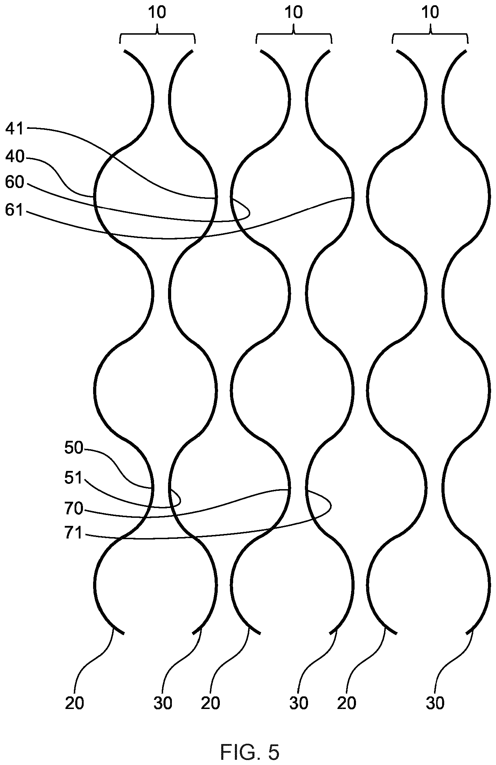

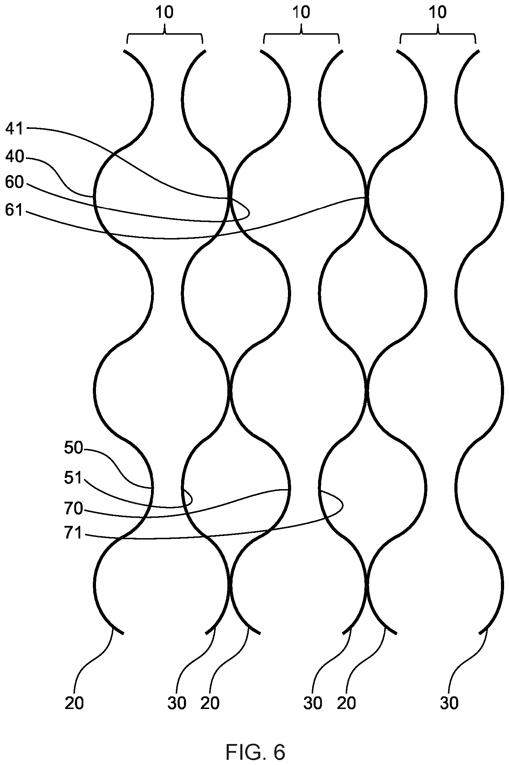

Die Kurven 30 weisen einen kleineren Absolutwert der Amplitude in x-Richtung auf als die Kurven 20. Auf diese Weise kann das Verformungsverhalten bei Belastung des erfindungsgemäßen Körpers weiter in Abhängigkeit von der Belastungsrichtung eingestellt werden. Ein zweiter erfindungsgemäßer deformierbarer Körper kann somit durch ein Verfahren schematisch aufgebaut werden, in dem zunächst eine Schicht mit einer Anordnung des Aufbaumterials in Kurven gemäß FIG. 4 generiert wird. In der in Aufbaurichtung nächsten Schicht haben sich die Kurven 20, 30 der jeweiligen Kurvenpaare 10 um eine vorbestimmte Strecke voneinander wegbewegt, in der in Aufbaurichtung darauffolgenden Schicht erneut um eine vorbestimmte Strecke, etc. Dieses wird solange wiederholt, bis sich über eine Zwischenstufe gemäß FIG. 5 eine Kontaktierung gemäß FIG. 6 ergibt. Anschließend läuft dieser Vorgang in Aufbaurichtung, aber mit umgekehrter Richtung der Bewegung der Kurven 20, 30 zueinander ab, bis wieder eine Kontaktierung gemäß FIG. 5 erhalten wird. Dieses wird so lange wiederholt, bis der gewünschte Gegenstand gebildet ist.

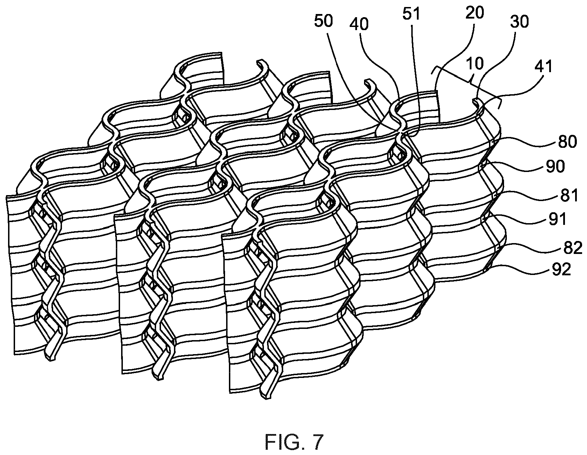

FIG. 7 zeigt einen dritten erfindungsgemäßen deformierbaren Körper in dreidimensionaler Ansicht. Man erkennt die in Aufbaurichtung aufeinander liegenden und miteinander verbundenen Schichten des Aufbaumaterials, welche Kurvenpaare 10 enthalten. Individuelle Kurven 20, 30 bilden die Kurvenpaare der Schichten. Auch hier sind für die Kurven 20, 30 eines Kurvenpaares 10 Abschnitte maximaler Entfernung zueinander 40, 41 und Abschnitte minimaler Entfernung zueinander 50, 51 definiert.

In der Aufbaurichtung des Körpers variiert der Abstand der Kurven 20, 30 im Kurvenpaar 10 periodisch mit der Aufbaurichtung. Auf der in FIG. 7 oben zu sehenden Seitenfläche des Körpers haben im Kurvenpaar 10 die Kurven 20, 30 ihren geringsten Abstand zueinander, so dass eine Kontaktierung an den Abschnitten minimaler Entfernung zueinander 50, 51 erfolgen kann.

Weiter in Richtung des unteren Endes des Körpers vergrößert sich in der jeweiligen Ebene der Abstand der Kurven innerhalb der Kurvenpaare bis zu eine Maximum 80. Da in benachbarten Kurvenpaaren der Ebene ebenfalls die Abstände wachsen, kommt es zu einer Kontaktierung mit einer Kurve des benachbarten Kurvenpaares.

Noch weiter in Richtung des unteren Endes des Körpers verringert sich der Abstand der Kurven innerhalb der Kurvenpaare der jeweiligen Ebene, bis sich wieder eine Kontaktierung der Kurven innerhalb des Kurvenpaares ergibt. Dieses erfolgt in der Ebene, die mit dem Bezugszeichen 90 gekennzeichnet ist. Das Muster - Vergrößerung und Verringerung der Abstände der Kurven - wiederholt sich weiter in Richtung des unteren Endes des Körpers, wie durch die korrespondierenden Bezugszeichen 81, 91, 82 und 92 gezeigt wird.

In FIG. 7 ist auch zu sehen, wie Verbindungspunkte der Kurven (20, 30) untereinander und/oder miteinander ein periodisch wiederkehrendes Muster in Form eines ein kubischen Gitters bilden.

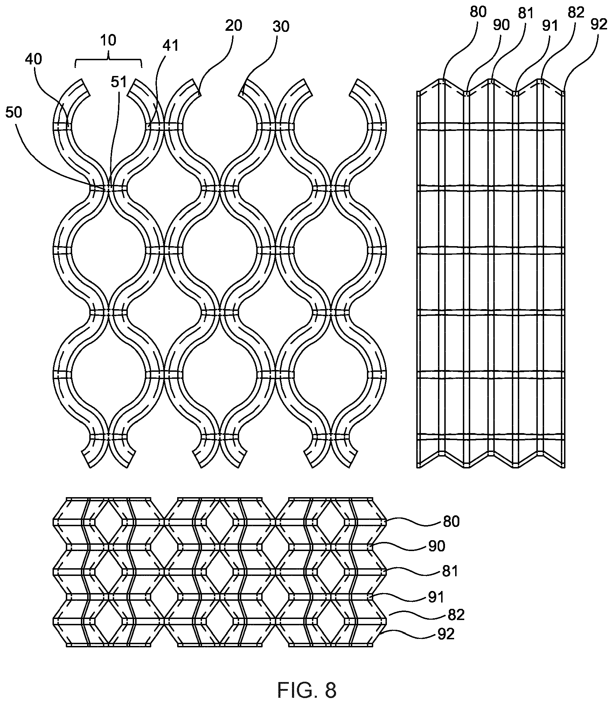

FIG. 8 schließlich zeigt den Körper aus FIG. 7 in Draufsicht und zwei Seitenansichten.

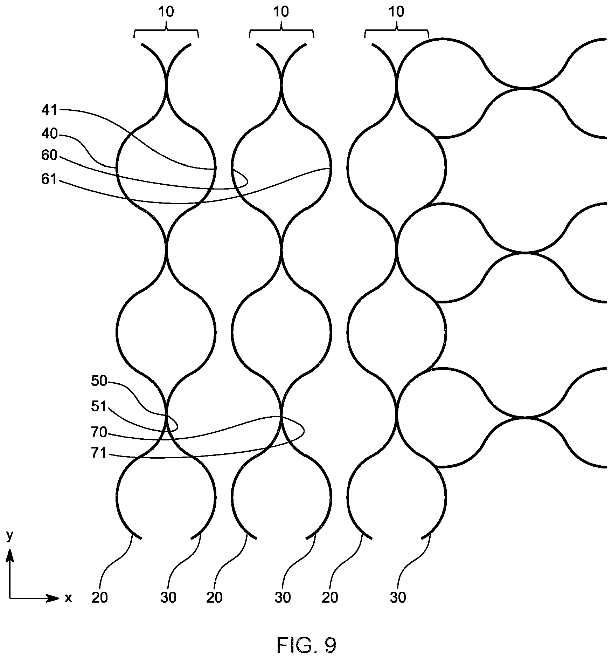

FIG. 9 zeigt eine Querschnittsansicht eines vierten erfindungsgemäßen deformierbaren Körpers. Der Körper gemäß FIG. 1 wurde derart modifiziert, dass Kurvenpaare 10 zwei verschiedene Ausbreitungsrichtungen haben. Im Bild dargestellt ist eine Ausbreitungsrichtung in y-Richtung und eine zweite Ausbreitungsrichtung in x-Richtung.

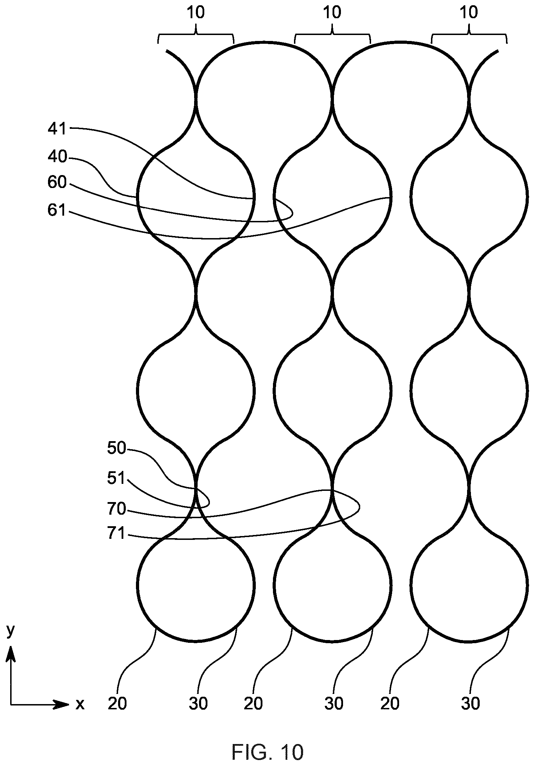

FIG. 10 zeigt eine Querschnittsansicht eines fünften erfindungsgemäßen deformierbaren Körpers. Der Körper gemäß FIG. 1 wurde derart modifiziert, dass Kurvenpaare an den Begrenzungen des Körpers miteinander verbunden sind. Dieses hat den Vorteil, dass die Schicht des Körpers in einem Durchgang in einem Schmelzschichtungsverfahren ohne Unterbrechung des Materialflusses aus einem Druckkopf hergestellt werden kann. Dieses erhöht die Effizienz des Verfahrens.

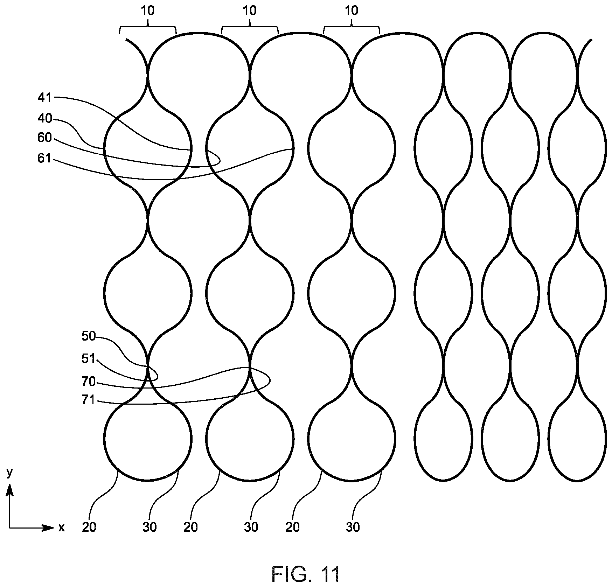

FIG. 11 zeigt eine Querschnittsansicht eines sechsten erfindungsgemäßen deformierbaren Körpers. Der Körper gemäß FIG. 10 wurde derart modifiziert, dass Kurvenpaare mit unterschiedlichen maximalen Abständen angefügt wurden. So kann räumlich aufgelöst die Stauchhärte des Körpers variiert werden.

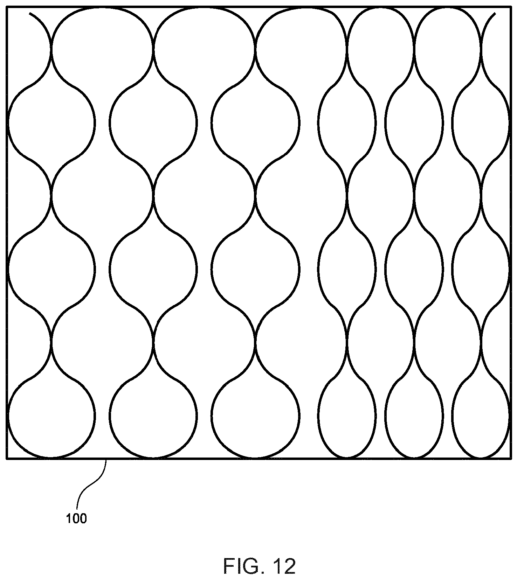

Der erfindungsgemäße Körper kann selbstverständlich von einer Wand oder Hülle wenigstens teilweise umschlossen sein. Zur Verdeutlichung zeigt FIG. 12 eine Querschnittsansicht des sechsten erfindungsgemäßen Körpers aus FIG. 11 mit einer Hülle 100.

### Erfindungsgemäße Materialien:

### Beispiel 1:

Ein TPU-1 (thermoplastisches Polyurethan) wurde hergestellt aus 1 Mol Polyesterdiol (Covestro) mit einem zahlenmittleren Molekulargewicht von ca. 2000 g/mol auf Basis von Adipinsäure, Hexandiol und Neopentylglycol sowie 4,85 Mol 2,2'-(1,4-Phenylendioxy)diethanol, 5,85 Mol technischem 4,4'-Diphenylmethandiisocyanat (MDI) mit > 98 Gew.-% 4,4`-MDI, 0,03 Gew.-% Irganox^{®} 1010 (Pentaerythritoltetrakis(3-(3,5-di-tert-butyl-4-hydroxyphenyl)propionat) von BASF SE) und 100 ppm Zinndioctoat sowie 0,5 Gew.-% Loxamid 3324. Hierzu wurden das Polyesterpolyol und das Diethanol auf 200 °C vorgeheizt und anschließend mit 80 Gew.-% des MDI bei 220 °C umgesetzt. Die Umsetzung fand in einem Zweischneckenextruder bei 280 U/min statt, wobei das restliche Isocyanate (MDI) und das Loxamid 3324 im Verlauf des Extruders umgesetzt wurde. Dieser als "Prepolymerverfahren" bekannte Prozess wird auch in "Methoden der organischen Chemie (Houben-Weyl), Bd. E 20, G. Thieme Verlag, Stuttgart, New York, 1987, S. 1613-1617 beschrieben.

Es wurde ein Polyurethan mit einem Zugspeichermodul bei Raumtemperatur (ISO 6721-1:2018-03, bzw. ISO 6721-4:2018-03) von 450 MPa bei einer Shore D-Härte (DIN ISO 7619-1:2012-02) eines spritzgegossenen Probenkörpers 60 bis 64 sowie einer reversiblen Dehnung (DIN 53504:2017-03) von 35-40% erhalten.

### Beispiel 2:

Ein TPU-2 wurde aus 1 Mol Polyesterdiol (Covestro) mit einem zahlenmittleren Molekulargewicht von ca. 900 g/mol auf Basis von ca. 56,7 Gew.-% Adipinsäure und ca. 43,3 Gew.-% 1,4-Butandiol sowie 1,77 Mol 1,4-Butandiol, 2,77 Mol technischem 4,4'-Diphenylmethandiisocyanat (MDI) mit > 98 Gew.-% 4,4`-MDI, 0,05 Gew.-% Irganox^{®} 1010 (Pentaerythritoltetrakis(3-(3,5-di-tert-butyl-4-hydroxyphenyl)propionat) von BASF SE, 0,2 Gew.-% Octanol und 200 ppm Zinndioctoat nach dem bekannten Statikmischer-Extruder-Verfahren, wie in DE 199 24 089 C1 als "One-shot-Dosierverfahren" beschrieben. In dem "One-shot Dosierverfahren" wird das MDI und das Polyesterdiol mit dem Butandiol innerhalb von maximal 1 Sekunde in einem ersten Statikmischer (oder einem entsprechenden Mischaggregat) homogenisiert und auf eine Temperatur von > 240 °C aufgeheizt, um so in einem zweiten Statikmischer (oder einem entsprechenden aufheizbaren Mischaggregat) zu dem gewünschten TPU vollständig umgesetzt zu werden.

Es wurde ein Polyurethan mit einem Zugspeichermodul bei Raumtemperatur (ISO 6721-1:2018-03, ISO 6721-4:2018-03) von 95 MPa bei einer Shore A-Härte (DIN ISO 7619-1:2012-02) eines spritzgegossenen Probenkörpers 90 bis 93 sowie einer reversiblen Dehnung (DIN 53504:2017-03) von 30-35% erhalten.

### Beispiel 3:

Ein TPU-3 (thermoplastisches Polyurethan) wurde aus 1 Mol Polyetherdiol mit einem zahlenmittleren Molekulargewicht von ca. 2000 g/mol auf Basis von Propylenoxid sowie 2,81 Mol 1,4-Butandiol, 0,28 Mol 1,6-Hexandiol, 4,09 Mol technisches 4,4'-Diphenylmethandiisocyanat (MDI) mit > 98 Gew.-% 4,4`-MDI, 0,3 Gew.-% Irganox^{®} 1010 (Pentaerythritoltetrakis(3-(3,5-di-tert-butyl-4-hydroxyphenyl)propionat) von BASF SE), 1,0 Gew.-% Loxamid 3324 (N,N'-Ethylen-bis-stearylamid) und 30 ppm Ti(IV)-Katalysator nach dem Prepolymerverfahren hergestellt.

Es wurde ein Polyurethan mit einem Zugspeichermodul bei Raumtemperatur (ISO 6721-1:2018-03, ISO 6721-4:2018-03) von 30 MPa bei einer Shore A-Härte (DIN ISO 7619-1:2012-02) eines spritzgegossenen Probenkörpers von 80 sowie einer reversiblen Dehnung (DIN 53504:2017-03) von 80% erhalten.

### Herstellung deformierbarer Körper:

Mit den TPU-1, TPU-2 und TPU-3 Materialien wurden mittels eines *Prusa i3 MK2S* der Firma *Prusa Research* Strukturen, wie in Figur 7 gezeigt gedruckt, wobei die Wandstärke des verdruckten Materials 0,4 mm betrug. Die erhaltenen Körper konnten mehrfach auf die Hälfte ihrer Ausdehnung in alle drei Raumrichtungen zusammen gedrückt werden, wobei sich das Material nach Beendigung der Krafteinwirkung wieder vollständig in seine ursprüngliche Form zurück bewegte.

## Patentansprüche

1. Deformierbarer Körper, wobei der Körper aus einer Mehrzahl von Schichten eines polymeren Aufbaumaterials aufgebaut ist und in welchem eine Aufbaurichtung senkrecht zu den Schichten definiert ist,
wobei der Körper Schichten mit einer Mehrzahl von durch das Aufbaumaterial gebildeten, sich periodisch berührend verlaufenden Kurvenpaaren (10) umfasst
und wobei der Körper Schichten mit einer Mehrzahl von durch das Aufbaumaterial gebildeten, gleichläufig zueinander verlaufenden Kurvenpaaren (10) umfasst,
die Kurvenpaare jeweils zwei gegenläufig zueinander verlaufende periodische Kurven (20, 30) umfassen,
die Kurvenpaare Abschnitte maximaler Entfernung zueinander (40, 41, 60, 61) und Abschnitte minimaler Entfernung zueinander (50, 51, 70, 71) umfassen,
in einem Teil der Schichten in benachbarten Kurvenpaaren (10) wenigstens ein Abschnitt maximaler Entfernung (41) einer Kurve mit einem Abschnitt maximaler Entfernung (60) einer benachbarten Kurve verbunden ist,
in einem weiteren Teil der Schichten in benachbarten Kurvenpaaren (10) wenigstens ein Abschnitt maximaler Entfernung (41) einer Kurve mit einem Abschnitt maximaler Entfernung (60) einer benachbarten Kurve nicht verbunden ist,
in einem weiteren Teil der Schichten in benachbarten Kurvenpaaren (10) wenigstens ein Teil der Abschnitte minimaler Entfernung (50, 51) miteinander verbunden sind und
in einem weiteren Teil der Schichten in benachbarten Kurvenpaaren (10) wenigstens ein Teil der Abschnitte minimaler Entfernung (50, 51) nicht miteinander verbunden sind,
**dadurch gekennzeichnet, dass**
in Aufbaurichtung gesehen sich die folgende miteinander in Aufbaurichtung wenigstens teilweise verbundener Schichtengruppe wenigstens einmal wiederholt:
eine oder mehrere Schichten, in denen in Kurvenpaaren (10) wenigstens ein Teil der Abschnitte minimaler Entfernung (50, 51) der Kurven (20, 30) miteinander verbunden sind;
eine oder mehrere Schichten, in denen in Kurvenpaaren (10) die Kurven (20, 30) nicht miteinander verbunden sind und nicht mit Kurven (20, 30) benachbarter Kurvenpaare (10) verbunden sind; und
eine oder mehrere Schichten, in denen in benachbarten Kurvenpaaren (10) wenigstens ein Abschnitt maximaler Entfernung (41) einer Kurve mit einem Abschnitt maximaler Entfernung (60) einer benachbarten Kurve verbunden ist.

2. Körper gemäß Anspruch 1, **dadurch gekennzeichnet, dass** in Aufbaurichtung gesehen in den einzelnen Schichten der Abstand der Kurven (20, 30) zueinander in einem Kurvenpaar (10) wenigstens teilweise periodisch veränderlich ist.

3. Körper gemäß Anspruch 1 oder 2, **dadurch gekennzeichnet, dass** das polymere Aufbaumaterial mindestens einen Thermoplasten umfasst.

4. Körper gemäß Anspruch 3, **dadurch gekennzeichnet, dass** der mindestens eine Thermoplast ein thermoplastisches Elastomer ist und eine Shore A Härte gemäß DIN ISO 7619-1 von ≥ 40 bis ≤ 98 aufweist.

5. Körper gemäß einem der Ansprüche 1 bis 4, **dadurch gekennzeichnet, dass** der Körper wenigstens teilweise von einer Hülle (100) umschlossen ist.

6. Verfahren zur Herstellung eines deformierbaren Körpers gemäß einem der Ansprüche 1 bis 5, wobei der Körper in einem additiven Fertigungsverfahren aus einem polymeren Aufbaumaterial hergestellt wird,
**dadurch gekennzeichnet, dass**
in einer Aufbaurichtung gesehen die folgende miteinander wenigstens teilweise verbundener Schichtengruppe in wenigsten einer Wiederholung erzeugt wird:
eine oder mehrere Schichten, in denen in Kurvenpaaren (10) wenigstens ein Teil der Abschnitte minimaler Entfernung (50, 51) der Kurven (20, 30) miteinander verbunden sind;
eine oder mehrere Schichten, in denen in Kurvenpaaren (10) die Kurven (20, 30) nicht miteinander verbunden sind und nicht mit Kurven (20, 30) benachbarter Kurvenpaare (10) verbunden sind; und
eine oder mehrere Schichten, in denen in benachbarten Kurvenpaaren (10) wenigstens ein Abschnitt maximaler Entfernung (41) einer Kurve mit einem Abschnitt maximaler Entfernung (60) einer benachbarten Kurve verbunden ist.

7. Verfahren gemäß Anspruch 6, **dadurch gekennzeichnet, dass** das polymere Aufbaumaterial mindestens ein thermoplastisches Elastomer umfasst.

8. Verfahren gemäß Anspruch 6 oder 7, **dadurch gekennzeichnet, dass** das additive Fertigungsverfahren ein Schmelzschichtungsverfahren ist.

9. Verfahren gemäß Anspruch 8, **dadurch gekennzeichnet, dass** das Aufbaumaterial zu mindestens einem Zeitpunkt aus einer Mehrzahl von Druckköpfen gleichzeitig ausgetragen wird.

10. Vorrichtung zum Stützen und/oder Lagern einer Person, umfassend einen deformierbaren Körper gemäß einem der Ansprüche 1 bis 5.

11. Vorrichtung gemäß Anspruch 10, **dadurch gekennzeichnet, dass** im Körper gemäß einem der Ansprüche 1 bis 5 Aussparungen für Lüfter und/oder Sensoren vorgesehen sind.

12. Vorrichtung gemäß Anspruch 11, weiterhin umfassend einen Belüfter zum Durchleiten von Luft durch zumindest einen Teil des deformierbaren Körpers.

## Claims

1. Deformable body, where the body is composed of a plurality of layers of a polymeric construction material and where a construction direction perpendicular to the layers is defined,
where the body comprises layers with a plurality of curve pairs (10) which are formed by the construction material and which are in periodic contact with one another
and where the body comprises layers with a plurality of curve pairs (10) which are formed by the construction material and which run parallel to one another,
the curve pairs respectively comprise two periodic curves (20, 30) running in opposition to one another,
the curve pairs comprise sections of maximal separation from one another (40, 41, 60, 61) and sections of minimal separation from one another (50, 51, 70, 71),
in a portion of the layers in adjacent curve pairs (10) at least one section of maximal separation (41) of a curve is connected to a section of maximal separation (60) of an adjacent curve,
in another portion of the layers in adjacent curve pairs (10) at least one section of maximal separation (41) of a curve is not connected to a section of maximal separation (60) of an adjacent curve,
in another portion of the layers in adjacent curve pairs (10) at least some of the sections of minimal separation (50, 51) are connected to one another and
in another portion of the layers in adjacent curve pairs (10) at least some of the sections of minimal separation (50, 51) are not connected to one another,
**characterized in that**
the following layer group, interconnected in construction direction at least to some extent, is repeated at least once in construction direction:
one or more layers in which in curve pairs (10) at least some of the sections of minimal separation (50, 51) of the curves (20, 30) are connected to one another;
one or more layers in which in curve pairs (10) the curves (20, 30) are not connected to one another and not connected to curves (20, 30) of adjacent curve pairs (10); and
one or more layers in which in adjacent curve pairs (10) at least one section of maximal separation (41) of a curve is connected to a section of maximal separation (60) of an adjacent curve.

2. Body according to Claim 1, **characterized in that** the separation of the curves (20, 30) from one another in a curve pair (10) is at least to some extent periodically variable in construction direction in the individual layers.

3. Body according to Claim 1 or 2, **characterized in that** the polymeric construction material comprises at least one thermoplastic.

4. Body according to Claim 3, **characterized in that** the at least one thermoplastic is a thermoplastic elastomer with Shore A hardness ≥ 40 to ≤ 98 in accordance with DIN ISO 7619-1.

5. Body according to any of Claims 1 to 4, **characterized in that** a covering (100) encloses the body at least to some extent.

6. Process for the production of a deformable body according to any of Claims 1 to 5, where the body is produced in an additive manufacturing process from a polymeric construction material,
**characterized in that**
the following layer group, interconnected at least to some extent, is produced in at least one repetition in a construction direction:
one or more layers in which in curve pairs (10) at least some of the sections of minimal separation (50, 51) of curves (20, 30) are connected to one another;
one or more layers in which in curve pairs (10) the curves (20, 30) are not connected to one another and not connected to curves (20, 30) of adjacent curve pairs (10); and
one or more layers in which in adjacent curve pairs (10) at least one section of maximal separation (41) of a curve is connected to a section of maximal separation (60) of an adjacent curve.

7. Process according to Claim 6, **characterized in that** the polymeric construction material comprises at least one thermoplastic elastomer.

8. Process according to Claim 6 or 7, **characterized in that** the additive manufacturing process is a melt-layering process.

9. Process according to Claim 8, **characterized in that** at at least one juncture the construction material is discharged simultaneously from a plurality of printing heads.

10. Device for supporting and/or bearing a person, comprising a deformable body according to any of Claims 1 to 5.

11. Device according to Claim 10, **characterized in that** in the body according to any of Claims 1 to 5 there are cutouts provided for fans and/or sensors.

12. Device according to Claim 11, moreover comprising an aerator for passing air through at least a portion of the deformable body

## Revendications

1. Corps déformable, le corps étant formé à partir d'une multitude de couches d'un matériau constitutif polymère et dans lequel une direction constitutive est définie perpendiculairement aux couches,
le corps comprenant des couches présentant une multitude de paires de courbes (10) formées par le matériau constitutif, s'étendant de manière à se toucher périodiquement
et le corps comprenant des couches présentant une multitude de paires de courbes (10) formées par le matériau constitutif, s'étendant parallèlement les unes aux autres,
les paires de courbes comprenant à chaque fois deux courbes périodiques (20, 30) s'étendant à l'opposé l'une de l'autre,
les paires de courbes comprenant des sections d'un éloignement maximal les unes des autres (40, 41, 60, 61) et des sections d'un éloignement minimal les unes des autres (50, 51, 70, 71),
dans une partie des couches, dans des paires de courbes (10) adjacentes, au moins une section d'un éloignement maximal (41) d'une courbe étant reliée à une section d'un éloignement maximal (60) d'une courbe adjacente,
dans une autre partie des couches, dans des paires de courbes (10) adjacentes, au moins une section d'un éloignement maximal (41) d'une courbe n'étant pas reliée à une section d'un éloignement maximal (60) d'une courbe adjacente,
dans une autre partie des couches, dans des paires de courbes (10) adjacentes, au moins une partie des sections d'un éloignement minimal (50, 51) étant reliées les unes autres,
dans une autre partie des couches, dans des paires de courbes (10) adjacentes, au moins une partie des sections d'un éloignement minimal (50, 51) n'étant pas reliées les unes aux autres,
**caractérisé en ce que**
vu dans la direction constitutive, le groupe suivant de couches au moins partiellement reliées les unes aux autres dans la direction constitutive se répétant au moins une fois :
une ou plusieurs couches dans lesquelles, dans des paires de courbes (10), au moins une partie des sections d'un éloignement minimal (50, 51) des courbes (20, 30) sont reliées les unes aux autres,
une ou plusieurs couches dans lesquelles, dans des paires de courbes (10), les courbes (20, 30) ne sont pas reliées les unes aux autres et ne sont pas reliées à des courbes (20, 30) de paires de courbes adjacentes (10) ; et
une ou plusieurs couches dans lesquelles, dans des paires de courbes (10) adjacentes, au moins une section d'un éloignement maximal (41) d'une courbe est reliée à une section d'un éloignement maximal (60) d'une courbe adjacente.

2. Corps selon la revendication 1, **caractérisé en ce que**, vu dans la direction constitutive, dans les différentes couches, la distance des courbes (20, 30) l'une par rapport à l'autre dans une paire de courbes (10) est au moins en partie variable périodiquement.

3. Corps selon la revendication 1 ou 2, **caractérisé en ce que** le matériau constitutif polymère comprend au moins un matériau thermoplastique.

4. Corps selon la revendication 3, **caractérisé en ce que** ledit au moins un matériau thermoplastique est un élastomère thermoplastique et présente une dureté Shore A selon la norme DIN ISO 7619-1 de ≥ 40 à ≤ 98.

5. Corps selon l'une quelconque des revendications 1 à 4, **caractérisé en ce que** le corps est au moins partiellement entouré d'une enveloppe (100).

6. Procédé pour la fabrication d'un corps déformable selon l'une quelconque des revendications 1 à 5,
le corps étant fabriqué dans un procédé de fabrication additive à partir d'un matériau constitutif polymère, **caractérisé en ce que**
vu dans une direction constitutive, le groupe suivant de couches au moins partiellement reliées les unes aux autres est généré avec au moins une répétition :
une ou plusieurs couches dans lesquelles, dans des paires de courbes (10), au moins une partie des sections d'un éloignement minimal (50, 51) des courbes (20, 30) sont reliées les unes aux autres,
une ou plusieurs couches dans lesquelles, dans des paires de courbes (10), les courbes (20, 30) ne sont pas reliées les unes aux autres et ne sont pas reliées à des courbes (20, 30) de paires de courbes adjacentes (10) ; et
une ou plusieurs couches dans lesquelles, dans des paires de courbes (10) adjacentes, au moins une section d'un éloignement maximal (41) d'une courbe est reliée à une section d'un éloignement maximal (60) d'une courbe adjacente.

7. Procédé selon la revendication 6, **caractérisé en ce que** le matériau constitutif polymère comprend au moins un élastomère thermoplastique.

8. Procédé selon la revendication 6 ou 7, **caractérisé en ce que** le procédé de fabrication additive est un procédé de stratification par fusion.

9. Procédé selon la revendication 8, **caractérisé en ce que** le matériau constitutif est éjecté, à au moins un moment, simultanément par une multitude de têtes d'impression.

10. Dispositif pour supporter et/ou poser une personne, comprenant un corps déformable selon l'une quelconque des revendications 1 à 5.

11. Dispositif selon la revendication 10, **caractérisé en ce que** des évidements pour des ventilateurs et/ou des capteurs sont prévus dans le corps selon l'une quelconque des revendications 1 à 5.

12. Dispositif selon la revendication 11, comprenant en outre un ventilateur pour faire passer de l'air à travers au moins une partie du corps déformable.
